# EUROPEAN PATENT APPLICATION

(11) **EP 0 936 226 A2**
(43) Date of publication of application: **18.08.1999**
(21) Application number: 99101787.2
(22) Date of filing: 15.02.1999
(51) Int. Cl.: C08F 210/02

(54) **Ethylene-maleic anhydride derivatives and their uses**

(30) Priority: 17.02.1998 US 24336
(71) Applicant: National Starch and Chemical Investment Holding Corporation, Wilmington, Delaware 19803-7663 (US)
(72) Inventor: Klein, Rodrigues A., Signal Mountain, Tennessee 37377 (US); Carrier, Allen M., Hixson, Tennessee 37343 (US)
(74) Representative: Held, Stephan, Dr.rer.nat., Dipl.-Chem.

(57) **Abstract**

The present invention is directed towards novel polymers prepared by the derivatization of ethylene-maleic anhydride copolymers using poly(ethylene glycols), alcohol ethoxylates or mixtures thereof, and the use of such polymers in laundry detergents, hard surface cleaners, textile finishing, fabric sizing, cement setting, and in the treatment of aqueous systems.

## Description

The present invention relates to novel, multifunctional, water-soluble polymers derived from ethylene-maleic anhydride copolymers which have been found to have exceptional properties for use in numerous applications including laundry detergents, hard surface cleaners, textile finishing, fabric sizing, cement setting, and in the treatment of aqueous systems.

Styrene-maleic anhydride copolymer derivatives are known to be useful in detergent compositions and as superplasticers for cement mixtures. U.S. Patent Nos. 3,485,762 and 5,158,996, respectively. U.S. Patent No. 3,485,762 discloses copolymers of styrene-maleic anhydride copolymers derivatized with poly(ethylene glycols) and their use as an aid for emulsifying, dispersing and suspending detergent compositions. Detergent formulations which contain copolymers of C₄-C₂₈ olefins and ethylenically unsaturated dicarboxylic anhydrides are also known. U.S. Patent No. 5,008,032. However neither of these copolymer systems are water soluble and therefore require an additional processing step before they can be used in aqueous applications.

It has been found in accordance with the present invention that novel polymers derived from ethylene-maleic anhydride and nonionic surfactants such as poly(ethylene glycols) and/or alcohol ethoxylates, are unexpectedly water soluble and have exceptional properties for use in numerous household, industrial and institutional applications.

The present invention is directed towards water soluble polymers derived from ethylene-maleic anhydride copolymers and hydroxyl containing nonionic surfactants. Specifically, the present invention is directed to novel polymers prepared by the derivatization of ethylene-maleic anhydride copolymers using poly(ethylene glycols), alcohol ethoxylates or mixtures thereof.

These polymers have been found to be effective in cleaning compositions such as laundry detergents, prespotters, dishwashing detergents, and hard surface cleaners. The polymers of the present invention have also been found to be effective in water treatment, textile treatment, paper manufacturing and in oil drilling operations.

The present invention is directed to novel water soluble polymers prepared by the derivatization of ethylene-maleic anhydride copolymers with hydroxyl containing nonionic surfactants, specifically poly(ethylene glycols), alcohol ethoxylates or mixtures thereof. The polymers of this invention have the following generic structure: 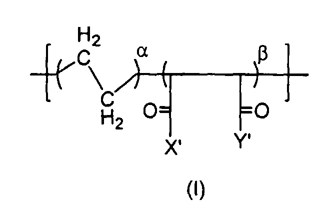 wherein α, β, X' and Y' are as defined below.

Specifically, the present invention is directed towards polymers comprising repeating units of the following general formulas: 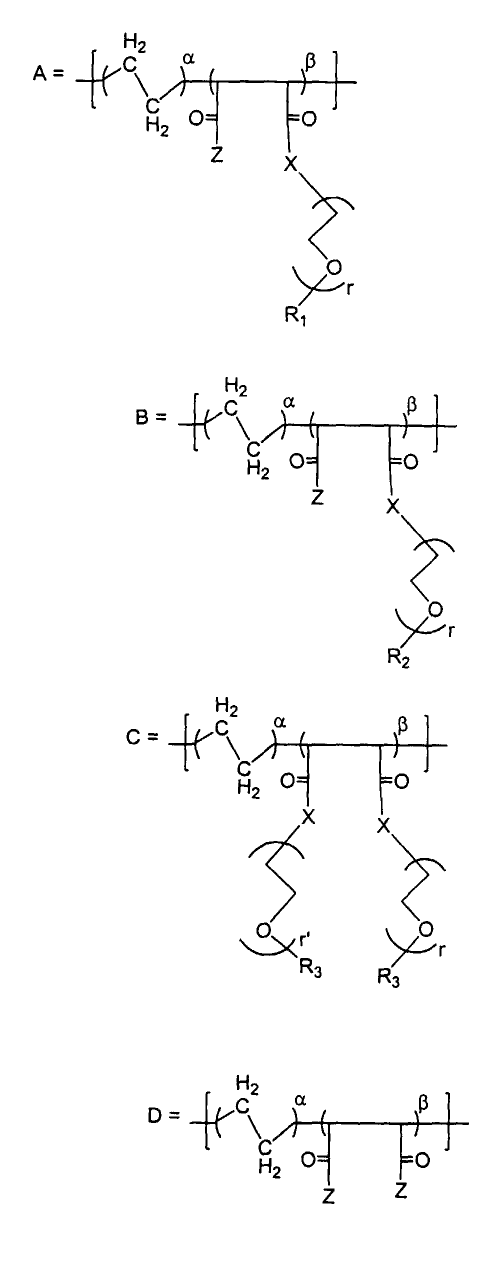
where X = O, N or S;
X' is X――(CH₂-CH₂-O)ᵣ -R₃, OH, ammonium, amine, ONa, OK, or other alkali metal salt derivative;
Y' is X――(CH₂-CH₂-O)ᵣ-R₄, OH, ammonium, amine, ONa, OK, or other alkali metal salt derivative;
Z is OH, ONa, OK or other alkali metal salt derivative, or ONR₅R₆R₇R₈ where R₅,R₆,R₇ and R₈ are the same or different and can be H, C₁₋₄ or C₁₋₄OH;
r= 0 to 20;
r' = 0 to 20;
α = 99-1%, β= 1-99%, and α + β= 100%; and
A= 0 to 100%, B = 0 to 100%, C= 0 to 100%, D = 0 to less than 50%, provided that A + B+ C + D=100;
R₁ = a C₁ -C₄ alkyl or H;
R₂ = a substituted or unsubstituted C₂₋₂₀ alkyl, aryl, alkaryl, or aralkyl;
R₃ = H or a substituted or unsubstituted C₁₋₂₀ alkyl, aryl, alkaryl, or aralkyl; and R₄ = R₁, R₂ or R₃
with the proviso that if R₁ = methyl or H, then B cannot equal 0% and C must be greater than 30%.

In polymers of the present invention, it is preferred that α = 75-25 and β = 25-75, more preferred that a = 60-40 and β = 40-60, and most preferred that α =β= 50.

The repeating units, A, B, C, and D, in polymers of the present invention may be alternating or random, and no stereochemistry is implied.

Structure D represents a repeating unit which has unreacted anhydride units, in other words, no substitution with poly(ethylene glycols), alcohol ethoxylates or mixtures thereof. It is preferred to minimize the number of unreacted anhydride units in the polymer of the present invention. In the most preferred embodiment, D = 0%.

A preferred polymer of the present invention is ethylene-maleic anhydride copolymerized with methoxy polyethylene glycol and alcohol ethoxylate.

Desirable properties in a cleaning product include 1) primary detergency- the washing of soil off of a substrate; 2) soil release- the build up of a protective polymer shield on the substrate during repeated washings which makes subsequent stain removal, using the polymer, more effective; and 3) soil guard- the build up of polymer on the substrate which makes subsequent stain removal more effective, even if the polymer is not used in the latter washing step. Effective cleaning compositions, such as laundry detergents, not only remove soil, but act as an inhibitor to soil redeposition.

The polymers of the invention are effective as primary detergents, soil release agents and soil guard agents for such materials as textiles, fabrics, skin, hair, metals, plastics, woods, ceramics and other domestic and industrial hard surfaces. Accordingly, the polymers of the present invention find particular application as components of cleaning compositions for a wide range of household, institutional and industrial applications, particularly fabric and hard surface cleaning compositions, such as heavy and light duty liquid detergents, fabric washing detergents, fabric conditioner products, automatic and manual dishwasher detergents, multi-surface cleaners, personal cleaning products, etc. In addition, the polymers are effective in water treatment, textile treatment, paper manufacturing and in oil drilling operations.

As a cleaning product, the polymers of the present invention can be applied directly to a substrate, or prepared as an aqueous solution to be applied directly to a substrate. Such aqueous solutions will comprise 0.1 to 75 weight percent polymer based upon the total weight of the aqueous composition.

The present invention also contemplates the addition of polymers of the present invention to conventional cleaning compositions to enhance the cleaning performance of the composition. A suitable amount of the polymer of the present invention can be added to a conventional cleaning composition, optionally in place of a portion of another ingredient typically present in such compositions.

In one preferred embodiment, the present invention is directed towards conventional laundry detergent products to which have been added a suitable amount of the polymer of the present invention. Preferably such detergent formulations will comprise 0.1 to 25 weight percent of polymer based upon the total weight of the cleaning composition.

Detergent compositions which may be improved by the addition of the polymers of this invention include compositions comprising 0 to 80% builder(s), 2 to 60% surfactant, and 0 to 96% optional components, such as buffers, enzymes, softeners, antistatic agents, bleaches, optical brighteners, perfumes and fillers. All percents are weight percent based upon the total weight of the detergent composition.

For example, in powdered detergent formulations, polymers of the present invention may be added in place of conventional builders such as zeolite, sodium citrate, soda ash and phosphates.

In a second preferred embodiment, the polymer is incorporated into a liquid household laundry detergent formulation, comprising 2 to 60% surfactant(s), 2 to 63% builder(s) and 0 to 96% of a combination of optional ingredients, such as buffers, enzymes, softeners, antistatic agents, fluoresces, perfumes, water and fillers. In such formulations, 0.5 to 25% of the polymer is added, based upon the total weight of the formulation.

Optional components of the detergent formulations include, but are not limited to, ion exchangers, alkalies, anticorrosion materials, antiredeposition materials, antistatic agents, optical brighteners, perfumes, fragrances, dyes, fillers, cheating agents, enzymes, fabric whiteners and brighteners, sudsing control agents, solvents, hydrotropes, bleaching agents, bleach precursors, buffering agents, soil removal agents, soil release agents, fabric softening agent, opacifiers and water. These optional components may comprise up to about 96% of the detergent formulation.

Typical surfactants present in cleaning composition, include non-ionic anionic surfactants. Examples of non-ionic surfactants include alcohol ethoxylates. Preferred alcohol ethoxylates have HLB (hydrophilic-lipophilic balance) values between 6 and 20. Examples of such materials are: C₁₂₋₁₄ natural alcohols ethoxylated with 3 moles of ethylene oxide, with an HLB of 6.9; C₉₋₁₁ synthetic alcohols ethoxylated with 2.5 moles of ethylene oxide with an HLB of 8.10; C₉₋₁₁ synthetic alcohols ethoxylated with 6 moles of ethylene oxide with an HLB of 12.5; C₁₂₋₁₅ synthetic alcohols ethoxylated with 7 moles of ethylene oxide and an HLB of 12; C₁₂₋₁₆ natural alcohols ethoxylated with 8 moles of ethylene oxide with an HLB of 12.6; and C₁₂₋₁₈ natural alcohols ethoxylated with 20 moles of ethylene oxide with an HLB of 16.

Other non-ionic surfactants which may be used include alkylphenol ethoxylates such as "Ethylan BCP" available from Akcros Chemicals; sorbitan esters, such as "Span 65" available from ICI Surfactants; ethoxylated sorbitan eaters such as "Tween 80" also available from ICI Surfactants; and secondary alcohol ethoxylates such as "Tergitol® 15S9" available from Union Carbide Corp. Also included are the low foaming modified non-ionic surfactants such as "Plurafacl® LF131" available from BASF Aktiengesellschaft.

Examples of anionic surfactants include C₈₋₁₂alkylbenzenesulfonates, C₁₂₋₁₆ alkane suflonates, C₁₂₋₁₆ alkylsulfates, C₁₂₋₁₆alkylsulfosuccinates, or C₂₋₁₆ sulfated ethoxylated alkanols.

Surfactants may be used alone or in combination with other surfactants. Surfactant choice is governed primarily by performance. Other suitable surfactants and their combinations will be familiar to one of ordinary skill in the art.

Typical detergent formulations which may be improved by the addition of the polymer of this invention are described in U.S. Patent Nos. 4,663,071, issued May 5, 1987 to Bush, et a., 4,906,397, issued March 6, 1990 to Leighton, et al., 5,149,455, issued September 22, 1992 to Jacobs, et al., 5,160,657 issued November 3, 1992 to Bortolotti, et al., and 5,164,108, issued November 17, 1992 to Appel, et al., also 5,061,396, issued October 29, 1991 to lovine, et al., and 5,087,682, issued February 11, 1992 to lovine, et al., all of which are hereby incorporated by reference.

The present invention also contemplates the addition of polymers of the present invention in detergent formulations, used commercially or experimentally, which employ a phosphate co-builder, phosphate-replacer builder or co-builder, or mixtures thereof, which functions primarily to sequester calcium, magnesium, barium or other polyvalent cations present in hard water. In these formulations, the polymer may be used to provide soil release benefits as well as functioning as a co-builder, builder, processing aid, antiredeposition agent, or anticrustation agent.

The detergent compositions of this invention may take any of the physical forms normally associated with detergent compositions, such as powders, granules, cakes and liquids. The practitioner will recognize which polymer of the present invention is best suited to the physical form selected for a particular detergent composition.

The detergent formulations may also be produced by any of the techniques commonly employed in the manufacture of detergent compositions, including, for example, slurry-making and spray-drying processes used in the manufacture of detergent powders. In these processes, the polymer may be incorporated into the slurry or blended with the spray-dried base powder.

In another preferred embodiment, the inventive polymers may be added to conventional hard surface cleaners to boost the performance thereof. Typical hard surface cleaners include dishwashing liquids, powder and gels; carpet cleaners; floor cleaners; window cleaners; tile cleaners; etc. In this embodiment, the polymers are present in these cleaning compositions in an amount of from 1 to 20% by weight, more preferably 2 to 5% by weight.

In another preferred embodiment, the polymers can be used in water treatment systems to prevent mineral scale formation and deposition. In this application, the water soluble polymers of the present invention are incorporated into a conventional water treatment composition comprising water treatment chemicals including corrosion inhibitors such as orthophosphates, zinc compounds and tolyltriazole. Conventional water treatment compositions are known to those skilled in the art. The level of the inventive polymer utilized in the water treatment compositions will be determined by the treatment level desired for the particular aqueous system to be treated. The water treatment compositions generally comprise about 10 to 25% by weight of the water soluble polymers of the present invention based upon the total weight of the composition, or 0.1 to 500 mg/L.

The polymers of the present invention also find use as an additive for retarding the set of hydraulic cement compositions which are used in subterranean zones in oil, gas and water wells. For example, in primary cementing, an hydraulic cement composition is placed in the annular space between the walls of a well bore and the exterior of a pipe. The cement composition is allowed to set whereby the pipe is bonded to the walls of the well bore by the set cement. However, subterranean high temperatures can cause the premature setting of the cement composition, such that the cement compositions sets before it can be completely pumped into place. Accordingly, the polymers of the present invention can be added to the cement compositions to prolong the setting times so that pumping can be completed before the composition sets.

The polymers of the present invention can also be used as an additive in squeeze cementing compositions. Squeeze cementing is a process which prevents the leak of oil, gas or water through small holes or cracks in the pipe in the well bore by plugging such holes, cracks, etc., by squeezing hydraulic cement compositions therein.

In these applications, the polymer will be present in amounts of 0.1 to 4 weight percent based on the weight of the cement.

In another preferred embodiment, polymers of the present invention may be used in fabric sizing and textile finishing. Textiles and yarn can be washed in a solution of the polymers. This washing results in exhaustion of the polymer onto the yarn or textile. The yarn is then woven into fabric. Because of the cleaning properties of the polymers of the present invention, desizing removes oils, wax and dirt more effectively than would occur with standard desizing procedures.

The polymers of the present invention are also useful to provide hydrophilic finishes for polyester in the textile finishing industry. These hydrophilic finishes increase the water absorbency of polyester improving the quality of the fabric and making it easier to clean. The hydrophilic finish may be applied during the polyester dyeing process, during which the dispersed dye solution is exhausted onto the fabric. The temperature is then raised to above the Tg of polyester (180°C) usually above 200°C. The dye and polymer migrate to the interior of the swollen polyester fiber and, on cooling, the dye and polymer are trapped in the polyester matrix. Other methods of textile finishing will be familiar to one of skill in the art.

A further application of the present invention is in paper manufacture. The polymers of the present invention, when added to an aqueous slurry of the wood pulp and salt byproducts, will prevent deposition of salt byproducts during the manufacturing process.

In addition to those mentioned above, other applications for the polymers of the present invention include dispersants for pigments in aqueous-based paints (silk, gloss) with good film forming properties and water-resistance; dispersants in aqueous inks cement super plasticizers for concrete; plasticizers for tile adhesives and grouts; film formers in polishes (household and automotive); hair fixatives in hairsprays; anti-redeposition agents; protective colloids; emulsion/microemulsion stabilizers; calcium scale modifiers; and corrosion inhibitors.

The following examples are intended to exemplify the present invention but are not intended in any way to limit the scope of the invention.

In the following examples the molecular weights of the ethylene-maleic anhydride copolymers were determined as follows.

Samples of linear ethylene-maleic anhydride polymer were obtained from Zeeland Chemicals and hydrolyzed prior to measuring the molecular weights. 5.0 grams of the polymer were stirred with 100.0 grams of water and 2.4 grams of 50% sodium hydroxide. The reaction temperature was raised to 60C for 6 hours. A clear solution of the hydrolyzed polymer (ethylene-maleic acid sodium salt) was obtained.

The molecular weight of this hydrolyzed polymer was then determined by gel permeation chromatography under the following conditions. The column bank used were TSK PWxl columns, specifically G4000PWxl, G3000PWxl, and G2500PWxl columns available from Toso-Haas Progel. The mobile phase consisted of 0.05M sodium phosphate monobasic and 0.05M sodium phosphate dibasic. This mobile phase was also used as the diluent in the preparation of the standards and the polymer samples, both of which were diluted to one percent total solids content. The detector used was a differential refractometer operated at 30 degrees Celsius. The polymer was compared to a calibration curve of the following four standards: PAA35K, PAA85K, 130K, and 165K which are pure sodium polyacrylate standards available from American Polymer Standards Corporation. The injection volume was 50 microliters with a run time of 45 minutes.

### EXAMPLE 1

A polymer in accordance with the present invention was prepared using ethylene maleic anhydride polymer ("EMA") with a M_{w} of 52,222 and Mₙ of 13,036 available from Zeeland Chemicals and a methoxy poly(ethylene glycol) with M_{w} of 350 available from Union Carbide by the following procedure: 21.2 grams of the EMA polymer was stirred with 120.0 grams of molten methoxy poly(ethylene glycol). The reaction mixture was initially a slurry. The slurry was heated to 95°C for 7 hours and formed a clear solution on heating. After 7 hours, the reaction product was cooled and 115.0 grams of water added during cooling. A clear aqueous solution with pH 2.4 and 52.5% solids was obtained. This polymer will be referred to as "Polymer 1".

### EXAMPLE 2

A polymer in accordance with the present invention was prepared by the method of Example 1 using 20.0 grams of the EMA polymer and 130.0 grams of methoxy poly(ethylene glycol) from Union Carbide with M_{w} of 750. The reaction mixture was heated to 95°C for 5.5 hours forming a clear solution upon heating. The reaction product was cooled and 120.0 grams of water was added during cooling. A clear aqueous solution with pH of 2.54 and 54.6% solids was obtained. This polymer will be referred to as "Polymer 2".

The following schematic represents the reaction occurring in Examples 1 and 2:

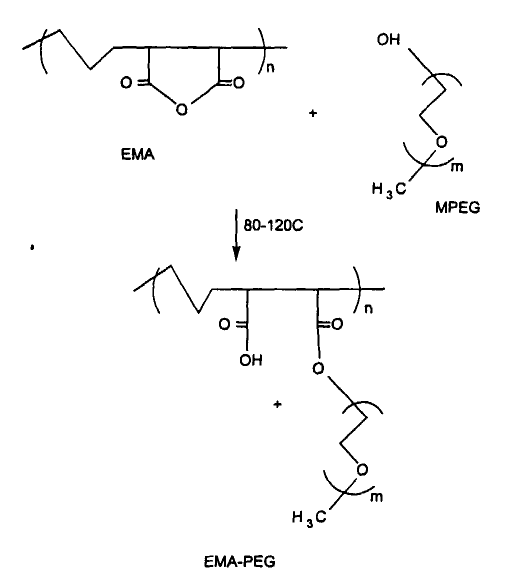

### EXAMPLE 3

Polymers 1 and 2 were tested for biodegradability and found to be inherently biodegradable according to the OECD 301C protocol.

### EXAMPLE 4

Polymers 1 and 2 were evaluated for their ability to remove oily stains from cotton. Two separate detergent formulations were prepared by adding 2% by weight of Polymer 1 or 2 to a commercial detergent powder. The test was conducted under European conditions, i.e., horizontal-axis washing machines holding 13.5 liters of water, wash temperature of 40°C, and dosage set at 3.5 g/l of the above mentioned detergent formulation. For comparison, a third detergent formulation was prepared using 2% Sokalan HP-22 an industry accepted soil release polymer available from BASF instead of Polymer 1 or 2; and a fourth formulation comprising the detergent without any of the polymers of the present invention or other commercial soil release agents.

The six soils tested were (1) purple lipstick; (2) black shoe polish; (3) brown shoe polish; (4) dyed mayonnaise; (5) iron oxide/olive oil mixture (1:1 by weight); (6) carbon black/motor oil (1:3 by weight). The unsoiled cotton swatches were first washed according to the above European specifications followed by air drying. The soils were then arranged on the swatches in 7 cm² circles. The swatches were washed again under identical conditions. The efficacy of soil removal was evaluated using reflectance measurements, △L = Ref_{after}- Ref_{before}, and the results shown in Table 1.

**Table 1**

| Stains | △L for Polymer 1 | △L for △L with Sokalan Polymer 2 HP-22 | | △L with no soil release polymer |
|---|---|---|---|---|
| purple lipstick | 0.23 | 5.9 1.69 | | 3.58 |
| brown shoe polish | 35.07 | 37.0 16.39 | | 23.68 |
| black shoe polish | 23.16 | 24.85 9.47 | | 14.69 |
| dyed mayonnaise | 34.62 | 40.35 32.3 | | 34.4 |
| iron oxide/olive oil | 10.06 | 7.41 2.05 | | 2.18 |
| carbon black/motor oil | 15.48 | 11.62 11.2 | | 10.34 |

The data in Table 1 indicate that the polymers of the present invention are very effective at removing soil, especially oily stains, from cotton. Detergent formulations prepared with Polymers 1 and 2 have larger △L values than the detergent alone or the detergents formulation containing Sokalan HP-22. For example, with black shoe polish as the stain, Polymer 1 has a △L of 23.16 as compared to 9.47 and 14.69 for the two comparative samples. Accordingly with black shoe polish soil, the polymers of the present invention are 2½ times as effective as the detergent containing Sokalan HP-22 and 1½ times as effective as detergent alone.

### EXAMPLE 5

Polymer 1 was tested for primary detergency under U.S. conditions in a terg-o-tomer. U.S. conditions are defined as 3 cycles, wash temperature of 93°F, terg speed 100 rpm, wash time 10 minutes with a 5 minute rinse, 1 liter for wash and rinse, 100 ppm hard water, all calcium, a detergent load of 0.9 g/L and 2 soiled swatches and 7 clean swatches/pot. A detergent with the following formulation was prepared:
4 wt.%Polymer 1
25 % Zeolite A
10% Soda Ash
4% Sodium Silicate (2.4/1)
1% Non-ionic Surfactant (alcohol ethoxylate with a 12-
15 carbon chain with 9 moles of ethoxylation)
9 % Anionic Surfactant (LAS, sodium salt) q.s with Sodium Sulfate
The soils tested were (1) EMPA 101 (Olive Oil/Carbon Black), (2) EMPA 116 (Blood/Milk/Ink) and (3) Dust/Sebum: Synthetic sebum/air conditioner filtrate and ground in clay. The soils were arranged on the swatches in 7 cm² circles. The cotton swatches were soiled and their reflectance measured (△L = Ref_{after}-Ref_{before}). The swatches were then washed according to the above specifications followed by air drying, and their reflectance measured. The washing and drying steps were repeated followed by a third measurement of reflectance. The results are shown in Table 2. For comparison the above was repeated with a detergent of the same formulation however without Polymer 1.

**Table 2**

| Soil | Detergent with Polymer 1 △L | | | Detergent without polymer △L | | |
|---|---|---|---|---|---|---|
| | Cycle 1 | Cycle 2 | Cycle 3 | Cycle 1 | Cycle 2 | Cycle 3 |
| EMPA 101 | 10.3 | 12.4 | 13.0 | 9.5 | 11.3 | 12.0 |
| EMPA 116 | 5.1 | 5.6 | 5.4 | 4.3 | 4.7 | 4.9 |
| Dust-Sebum | 8.3 | 10.2 | | 7.1 | 9.5 | |

The data in Table 2 indicate that the addition of Polymer 1 to a detergent formulation improves the primary detergent of the detergent formulation. Specifically, the △La for the detergent formulation comprising Polymer 1 are larger than for detergent without polymer added. For example, with EMPA 101 as the soil, cycle 1 shows a △L of 10.3 which is larger than the △L for the same soil washed without polymer, i.e., 9.5

### EXAMPLE 6

In this example, a series of EMA-PEG's polymers were hydrophobically modified using a series of alcohol ethoxylates.

A series of EMA-PEG polymers were prepared using an EMA polymer with M_{w} = 52,222 and Mₙ =13,036 available from Zeeland Chemicals and a series of methoxy (polyethylene glycols) of different molecular weights available from Union Carbide. The amounts of EMA and MPEG used in this procedure were varied as shown in Table 3. The hydrophobically modified EMA-PEG copolymers were prepared according to the procedure of Example 1.

**Table 3**

| SAMPLE # | MOLECULAR WEIGHT OF MPEG | WT OF EMA (G) | WT OF MPEG (G) | WT OF THE ALCOHOL ETHOXYLATE | RXN TEMP °C | % SOLIDS |
|---|---|---|---|---|---|---|
| I | 350 | 10.0 | 55.0 | 5.0g C₁₂₋₁₅, 9EO | 85 | 29.3 |
| II | 550 | 10.0 | 89.0 | 5.0g C₁₂₋₁₅, 9EO | 85 | 48.7 |
| III | 750 | 10.0 | 121.0 | 7.5g C 12-15, 9EO | 85 | 53.7 |
| IV | 350 | 10.0 | 55.0 | 5.0g C 12-15, 3EO | 85 | 48.2 |
| V | 550 | 10.0 | 89.0 | 5.0g C 12-15, 3EO | 85 | 48.2 |
| VI | 750 | 10.0 | 121.0 | 7.5g C 12-15, 3EO | 85 | 55.9 |
| VII | 350 | 10.0 | 55.0 | 5.0g C 12-15, 1EO | 85 | 47.6 |
| VIII | 550 | 10.0 | 89.0 | 5.0g C 12-15, 1EO | 85 | 38.5 |
| IX | 750 | 10.0 | 121.0 | 7.5g C 12-15, 1EO | 85 | 44.8 |
| X | 350 | 10.0 | 55.0 | 5.0g C 12-15, 9EO | 115 | |
| XI | 550 | 10.0 | 89.0 | 5.0g C 12-15, 9EO | 115 | 49.5 |
| XII | 750 | 10.0 | 121.0 | 7.5g C 12-15, 9EO | 115 | too viscous |
| XIII | 350 | 21.2 | 120.4 | None | 95 | 50.8 |
| XIV | 750 | 20.0 | 130.0 | None | 95 | 51.9 |

By balancing the hydrophobic-hydrophilic characteristics of the polymer, the polymer's properties may be modified. For example, the poly(ethylene glycol) side chain brings complete hydrophilicity to the polymer. By modifying this side chain, the hydrophobic-hydrophilic characteristic of the polymer can be modified to provide the desired properties depending on the end use of the polymer. For example, polymers of the present invention can be used directly on a substrate, directly on a substrate as part of an aqueous solution or as part of a cleaning or detergent composition. Each of these different end uses will require a different balance of the hydrophobic and hydrophilic properties of the polymer.

### EXAMPLE 7

The level of esterification of samples I, II, X and XI from Example 6 were determined by ¹³C NMR and the results shown below in Table 4.

**Table 4**

| SAMPLE # | RXN TEMP°C | % ESTERIFICATION |
|---|---|---|
| I | 85 | 64 |
| II | 85 | 63 |
| X | 115 | 99 |
| XI | 115 | 100 |

The results indicate that increasing the reaction temperature from 85 to 115°C causes esterification to go to completion. For example, Samples I and X are made up of the same components in the same amounts. Sample X, at 115°C, is 99 percent esterified, while Sample I, at 85°C is only 64 percent esterified.

### EXAMPLE 8

The polymers of Example 6 were evaluated as a prespotter. In this test 2 grams of polymer were spotted on a cotton swatch, stained with dust/sebum and allowed to sit overnight. The swatch was then washed in a terg-o-tometer using 0.9 g/l Purex, a commercially available detergent from Dial Corp., at 93°F, 80 rpm and 110 ppm hardness using a 10 minute wash and 5 minute rinse. The reflectance (L values) were measured before and after the wash. A control, without polymer, was compared. The difference in L values, determined as described in Example 5, are reported as ΔL in Table 5. The samples containing polymer showed higher ΔL values than the control, indicating better cleaning performance than the control.

**Table 5**

| Samples | ΔL |
|---|---|
| I | 13.65 |
| II | 14.34 |
| III | 14.68 |
| IV | 14.77 |
| V | 15.34 |
| VI | 13.6 |
| VII | 13.04 |
| VIII | 13.2 |
| IX | 12.73 |
| X | 14.87 |
| XI | 14.05 |
| XIII | 10.94 |
| IV | 12.47 |
| None | 7.06 |

### EXAMPLE 9

The polymers of example 6 were tested for primary detergency using the generic detergent formulation listed below:
4% polymer of Example 6
25% Zeolite A
10% Soda Ash
4% Sodium Silicate (2.4/1)
1% Non-ionic Surfactant (Neodol 25-9)
9% Anionic Surfactant (LAS, sodium salt)
q.s with Sodium Sulfate

The wash conditions were 1 cycle, wash temperature of 93°F, terg speed 80 rpm, wash time 10 minutes with a 5 minute rinse, 1 liter for wash and rinse, 100 ppm hard water, all calcium, a detergent load of 0.9 g/L and 2 soiled swatches and 4 white swatches/pot. The ΔL's were determined as described in Example 5 and compared to a sample without polymer (control). The results are shown in Table 6.

**Table 6**

| Polymer | ΔL |
|---|---|
| I | 13.9 |
| II | 13.9 |
| III | 14.6 |
| IV | 13.5 |
| V | 14.1 |
| VI | 14.3 |
| VII | 15.0 |
| VIII | 7.1 |
| IX | 14.3 |
| X | 13.3 |
| XI | 13.9 |
| XIII | 12.5 |
| IV | 13.7 |
| Control | 10.0 |

The data shown in Table 6 indicate that these polymers have excellent primary detergency on soils such as dust sebum, with most of the samples showing ΔL's larger than the control.

### EXAMPLE 10

Polymers 1 and 2 were tested for soil release on cotton. Cotton swatches were pre-washed three times with 0.9 g/l of a commercial laundry powder containing 4% Polymer 1 in a terg-o-tometer at 93°F, 110 ppm hardness and 80 rpm. Following these three pre-washes, the cotton swatches were soiled with olive oil/brandy black clay. A set of the soiled cotton swatches were then washed again with detergent containing the polymer, and a separate set of the soiled swatches washed in detergent without the polymer. This was repeated with 4% Polymer 2. A control, which was prewashed three times with detergent without polymer, soiled and then washed again with detergent without polymer, was compared. The data shown in Table 7 indicate that these polymers have better soil release properties than the control.

**Table 7**

| Sample | % solids | post wash with polymer ΔL | post wash without polymer DL |
|---|---|---|---|
| Polymer 1 | 50 | 32.1 | 33.1 |
| Polymer 2 | 50 | 29.7 | 30.3 |
| Control | | 30.2 | 30.2 |

### EXAMPLE 11

The calcium binding ability of Polymers 1 and 2 were evaluated using the Hampshire calcium binding test. In this test a 0.25 molar calcium acetate solution was titrated against a solution containing a 2% sodium carbonate solution and 2.0% Polymer 1 until the solution becomes cloudy. This was repeated with 2% Polymer 2. For comparison, Alcosperse®-602N, a sodium polyacrylate industry standard available from Alco Chemical Company, and a (2-acrylamido-2-methylpropane sulfonic acid) and acrylic acid polymer described in U.S. Pat. No. 5,049,288 were also tested. The data in Table 8 indicate that these polymers have excellent calcium binding ability.

**Table 8**

| Polymer | ml of 0.25 M calcium acetrate required to titrate to a cloudy end point |
|---|---|
| Polymer 1 | > 100 |
| Polymer 2 | 25.0 |
| Alcosperse®-602N | 16.0 |
| (2-acrylamido-2-methylpropane sulfonic acid) and acrylic acid polymer | >100 |

### EXAMPLE 12

Some of the polymers of Example 6 were tested in a modified Nace calcium carbonate test (without magnesium) to determine their usefulness for calcium carbonate scale inhibition in water treatment applications.

The data, shown in Table 9, indicate that these polymers can inhibit calcium carbonate scale. For example, Polymer X when used in an amount of 18 mg/l in water will prevent 63.1% of the calcium carbonate present from precipitating out of solution.

**Table 9**

| POLYMER | TREATMENT LEVEL(mg/l) | AVERAGE % INHIBITION |
|---|---|---|
| X | 5 | 25.7 |
| | 9 | 43.8 |
| | 18 | 63.1 |
| | 100 | 73.3 |
| XII | 5 | 23.3 |
| | 9 | 32.9 |
| | 18 | 60.3 |
| | 100 | 75.1 |
| IV | 5 | 38.2 |
| | 9 | 60.9 |
| | 18 | 74.5 |
| | 100 | 74.9 |

### EXAMPLE 13

A polymer in accordance the with the present invention was prepared as follows: 10.0 grams of a low molecular weight an EMA polymer with M_{w} of 52,222 and Mₙ of 13,036 and available from Zeeland Chemicals was slurried in 78.0 grams of a C₁₂₋₁₅ 7EO alcohol ethoxylate. This mixture was heated at 115°C for 6.5 hours. A clear viscous yellow solution was obtained.

### EXAMPLE 14

The polymer of Example 13 was tested as a prespotter. Two grams of the polymer were applied to stained (dust-sebum) swatches and let sit overnight. The swatches were then washed in 0.9 g/L of AATCC detergent (American Association of Textile Chemists and Colorists, available from Textile Innovators, Windsor, North Carolina). The wash was 10 minutes followed by a 5 minute rinse. The test was run at 93°F and 80 rpm. The data, shown in Table 10, indicate that this polymer is excellent at removing stains from cotton and polyester. For example, the polymer was more than twice as effective on cotton as compared to a sample not prespotted with the polymer.

**Table 10**

| Polymer | Stain | Prespotter test DE |
|---|---|---|
| None | Dust-Sebum on cotton | 6.5 |
| Polymer of Example 12 | Dust-Sebum on cotton | 15.0 |
| None | Dust-Sebum on polyester | 17.5 |
| Polymer of Example 12 | Dust-Sebum on polyester | 20.5 |

### EXAMPLE 15

A polymer in accordance with the present invention was prepared from 10.0 grams an EMA polymer with M_{w} of 52,222 and Mₙ of 13,036 available from Zeeland Chemicals was slurried in 52.5 grams of Carbowax methoxy poly(ethylene glycol), M_{w} = 350, available from Union Carbide and 7.5 grams of Neodol 25-9 available from Shell Chemicals. The mixture was heated to 11 5°C for 6 hours. A clear yellow solution was obtained. To this mixture was added 275 grams of water and 4.8 grams of a 50% solution of NaOH. The final product was a clear light yellow solution which had 19.3% solids.

### EXAMPLE 16

The polymer of Example 15 was applied as a hydrophilic finish in the following manner. In a terg-o-tometer, swatches of prewashed polyester were stirred in 100 grams of a 10% solution of the polymer of Example 15 for 15 minutes. The swatches were air dried and then heated in a 260°C oven for 1 minute. The swatches were then rinsed for 5 minutes and dried in a dryer. The above was repeated with a control swatch which was treated with water alone.

The hydrophilicity of the swatches was tested by dropping 0.15 ml of a dilute dye solution on to the fabric. The swatches treated with the polymer of Example 15 wicked to a far greater extent than the control swatches which were treated with water alone. These results indicate that the hydrophilicity of polyester can be improved tremendously by using polymers in accordance with the present invention.

### EXAMPLE 17

Various quantities, from 0.1 to 4 wt.%, of the polymer produced as described in Example 1 above are added to test portions of a base cement slurry. The base cement slurry is comprised of Lone Star Class H hydraulic cement and water in an amount of 38% by weight of dry cement. The base slurry has a density of 16.4 pounds per gallon. The cement compositions containing the polymer prepared in Example 1 are tested for thickening times at various temperatures in accordance with the standard API thickening time testing procedures set forth in API Specification for Materials and Testing for Well Cements, API Specification 10A, 21st Edition dated Sep. 1, 1991, of the American Petroleum Institute, Washington, D.C. For comparison purposes, samples of the base cement slurry without polymer are also tested for thickening times at various temperatures.

The cement slurries containing the polymer of this invention have longer thickening times than the base cement slurry without the polymer when tested under identical conditions.

## Claims

1. A polymer comprising the polymerization product of ethylene maleic anhydride with a nonionic surfactant selected from the group consisting of poly(ethylene glycols), alcohol ethoxylates or mixtures thereof, wherein the polymer comprises repeating units of the following general formulas: 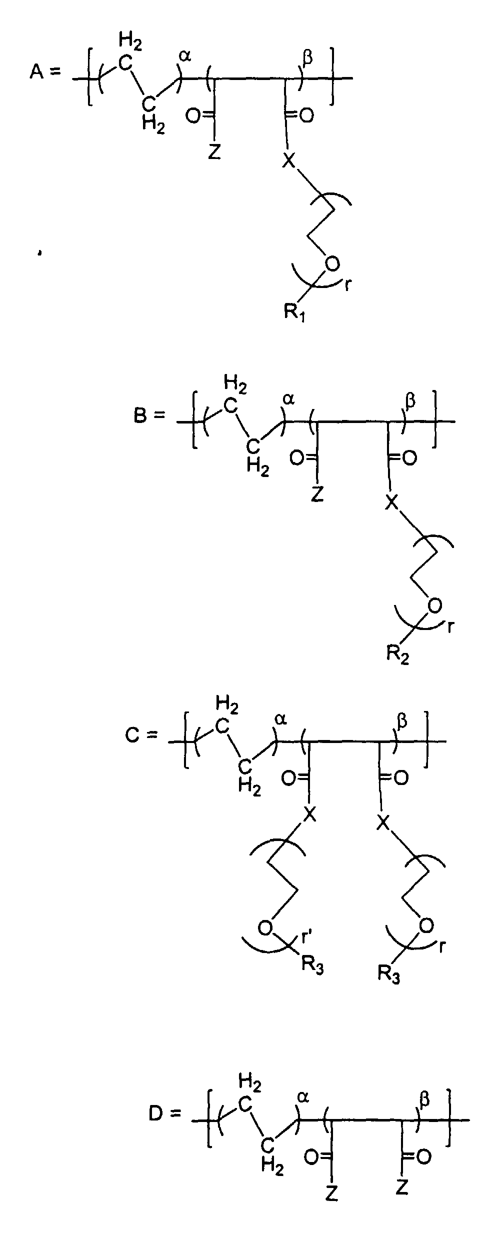
where X = O, N or S;
Z is OH, ONa, OK or other alkali metal salt derivative, or ONR₅,R₆,R₇R₈ where R₅,R₆,R₇ and R₈ are the same or different and can be H, C₁₋₄ or C₁₋₄OH;
r = 0 to 20;
r'= 0 to 20;
α'= 99-1%, β = 1-99%, and α + β = 100%; and
A= 0 to 100%, B = 0 to 100%, C= 0 to 100%, D = 0 to less than 50%, provided that A + B+ C + D=100;
R₁=a C₁ -C₄ alkyl or H;
R₂ = a substituted or unsubstituted C₂₋₂₀ alkyl, aryl, alkaryl, or aralkyl;
R₃ = H or a substituted or unsubstituted C₁₋₂₀ alkyl, aryl, alkaryl, or aralkyl; and
R₄=R₁,R₂ or R₃
with the proviso that if R₁ = methyl or H, then B cannot equal 0% and C must be greater than 30%.

2. A cleaning composition comprising:
a) a cleaning formulation; and
b) a polymer according to Claim 1.

3. A method for inhibiting redeposition of soil during washing of fabric in hard water, comprising the step of:
a) contacting the fabric with a detergent composition comprising an amount of a water soluble polymer according to Claim 1 effective to inhibit redeposition of soil during washing of fabric in hard water.

4. A method for removing soil during washing comprising the steps of
a) adding to a detergent composition an amount of a water soluble or water dispersible polymer according to Claim 1;
b) prewashing the fabric with the detergent composition prior to soiling;
c) washing the fabric in a detergent composition which optionally contains said water soluble or water dispersible polymer.

5. A method for manufacturing powdered laundry detergent, comprising the steps of:
a) providing a laundry detergent composition; and
b) adding an effective amount of a water soluble according to Claim 1.

6. A method for sequestration of water hardness ions, comprising the step of adding to aqueous media containing water hardness ions a water soluble polymer according to Claim 1 in an amount effective to sequester the water hardness ions.

7. A method for treating textiles comprising adding to the process a water soluble polymer according to Claim 1 in an amount effective to remove soil during the washing, scouring, rinsing, dyeing or finishing process.

8. A method for applying a hydrophilic finish to a substrate comprising adding to the process a water soluble polymer according to Claim 1 in an amount effective to provide said hydrophilic finish.

9. A method for dispersing particulate matter in an aqueous system comprising adding to the aqueous system a polymer according to Claim 1 in an amount effective to disperse said particulate matter.

10. A method for inhibiting the deposition of mineral scale in an aqueous system comprising introducing into the aqueous system a water soluble polymer according to Claim 1 in an amount effective to inhibit the deposition of the mineral scale in the aqueous system.
